# EUROPÄISCHE PATENTSCHRIFT

(11) **EP 0 274 148 B1**
(45) Veröffentlichungstag und Bekanntmachung des Hinweises auf die Patenterteilung: **18.11.1993**
(21) Anmeldenummer: 87202355.1
(22) Anmeldetag: 30.11.1987
(51) Int. Cl.: B01D 53/36

(54) **Verfahren zur katalytischen Reduktion von in einem Gas enthaltenem NO**
Process for the catalytic reduction of nitrogen monoxide in a gas
Procédé de réduction catalytique du monoxyde d'azote contenu dans un gaz

(30) Priorität: 06.12.1986 DE 3641773
(43) Veröffentlichungstag der Anmeldung: 13.07.1988
(73) Patentinhaber: METALLGESELLSCHAFT AG, 60015 Frankfurt (DE)
(72) Erfinder: Weisweiler, Werner Prof. Dr., D-7537 Remchingen-Singen (DE)

(56) Entgegenhaltungen:
- EP-A- 0 181 108
- EP-A- 0 266 807
- WO-A-86/05712
- DE-A- 2 448 647
- DE-A- 2 504 027
- DE-A- 2 705 818
- DE-A- 2 726 892
- DE-B- 1 253 685
- DE-C- 2 525 980
- FR-A- 2 371 961
- GB-A- 1 548 806
- Ullmanns Encyklopädie der technischen Chemie, 4.Auflage, Bd.3, S.488-489, und Bd.13, S.542

## Beschreibung

Die Erfindung bezieht sich auf ein Verfahren zur katalytischen Reduktion von in einem SO₂-haltigen Gas enthaltenem NO mit dem Reduktionsmittel NH₃. Ein derartiges Verfahren gehört zum bekannten Stand der Technik und wurde bereits in unterschiedlicher Weise modifiziert.

Aus der DE-C-2 525 880 ist ein Verfahren zum Entfernen von Stickstoffoxiden aus Abgasen bekannt, die neben Stickstoffoxiden Schwefeloxide enthalten. Bei diesem bekannten verfahren werden die Abgase im Gemisch mit NH₃ bei Temperaturen von 250 bis 550°C über einen porenhaltigen Katalysator geleitet, der eine Eisen und/oder Kupfer enthaltende aktive Komponente auf einem Siliziumdioxid-Aluminiumoxid-Träger aufweist. Eisen und Kupfer können auch in Form ihrer Oxide oder Sulfate als aktive Komponenten eingesetzt werden. Die aktive Komponente kommt in einer Menge von 0,5 bis 20 Gew.% des aktiven Metalls, bezogen auf den Träger, zur Anwendung. Der Träger enthält 60 bis 99 Gew.% SiO₂. Beim bekannten Verfahren beträgt das Molverhältnis NH₃ : NO = 1 : 1 bis 1,2 : 1. Für die Durchführung des bekannten Verfahrens kann ein Füllkörperreaktor oder ein Wabenreaktor verwendet werden, wobei der Druckverlust möglichst niedrig gehalten werden soll.

Die DE-A-2 504 027 offenbart ebenfalls ein Verfahren zur selektiven katalytischen Reduktion von Stickoxiden in Abgasen, die neben Stickoxiden auch Schwefeloxide enthalten. Bei diesem Verfahren wird die Reduktion in Gegenwart eines festen, Eisensulfat auf einem Träger enthaltenden Katalysators unter Verwendung von NH₃ als Reduktionsmittel bei einer Temperatur im Bereich von 250 bis 550°C durchgeführt. Als Katalysatorträger kann bei diesem Verfahren Aluminiumoxid, Siliziumdioxid, ein Siliziumdioxid und Aluminiumoxid enthaltendes feuerfestes Material, Diatomeenerde, Aktivkohle, Zirkonoxid, Zeolith, ein Molekularsieb, ein Siliziumdioxid und Magnesiumoxid enthaltendes feuerfestes Material, Cordierit oder Mullit verwendet werden. Die Eisenkonzentration des Katalysators beträgt 0,5 bis 20 Gew.%, bezogen auf das Gewicht des Trägers. Das Verfahren kann in einem Festbettreaktor, in einem Wabenreaktor oder in einem Wirbelbettreaktor durchgeführt werden.

Aus der Druckschrift WO-A-86/05712 ist ein Verfahren zur katalytischen Abgasentstickung bekannt, das im Flugstromreaktor unter Verwendung von NH₃ als Reduktionsmittel durchgeführt wird. Die Katalysatorteilchen haben eine Größe von 20 bis 200 µm und bestehen aus TiO₂ und Wo₃, wobei die Elemente V, Ca, Mo, Fe, Cr und/oder Cu zusätzlich enthalten sein können.

Die Druckschrift EP-A-0 266 807 (publiziert am 11.05.88) schlägt ein Verfahren zur katalytischen Reduktion von in einem SO₂-haltigen Gas enthaltenem NO mit dem Reduktionsmittel NH₃ vor, bei dem das SO₂- und NO-haltige Gas mit NH₃ gemischt, die Mischung dem Katalysator in einer Menge von 0,2 bis 20 Nl/Minute und pro g Katalysator zugeführt und dort bei 185 bis 500°C sowie bei Normaldruck in der Wirbelschicht zur Reaktion gebracht wird, wobei der Katalysator eine Teilchengröße von 0,1 bis 3 mm hat und aus einem sauren Träger sowie einer aktiven Komponente zusammengesetzt ist und wobei die aktive Komponente aus V₂O₅, MnO₂, CuO, Fe₂O₃, NiO und/oder Y₂O₃ besteht sowie in einer Menge von 0,5 bis 20 Gew.% auf dem Träger aufgebracht ist.

Schließlich offenbart die Druckschrift GB-A-1 548 806 ein Verfahren zur Abtrennung von Stickoxiden aus Gasmischungen, die neben Stickoxiden auch Oxide des Schwefels enthalten. Bei diesem Verfahren werden die Stickoxide mit NH₃ an einem geeigneten Katalysator bei einer Temperatur von 250 bis 450°C reduziert. Der Katalysator befindet sich in einem Reaktor und wird diesem entnommen, regeneriert, vom anhaftenden Staub befreit und in den Reaktor zurückgeführt. Während der Rückführung des Katalysators in den Reaktor wird ein inertes Gas mit einer Temperatur von mehr als 200°C in die Region des Reaktors eingebracht, in die der Katalysator zurückgeführt wird. Der Katalysator besteht aus den Oxiden des Vanadiums, Wolframs, Molybdäns, Eisens, Titans und Zinns sowie aus dem als Träger wirkenden Al₂O₃ oder TiO₂. Der Katalysator kann durch Kalzination bei 350 bis 800°C, durch Waschen mit Wasser und anschließende Kalzination bei 100 bis 500°C oder durch Imprägnieren mit einer wäßrigen Lösung der Katalysatorkomponenten sowie anschließendes Kalzinieren bei 350 bis 800°C regeneriert werden. Das bekannte Verfahren kann im bewegten Bett durchgeführt werden, wobei beispielsweise 5 Vol.% des Katalysators pro Tag aus dem bewegten Bett entnommen, regeneriert und zurückgeführt werden.

Demgegenüber ist bei dem erfindungsgemäßen Verfahren zur katalytischen Reduktion von in einem SO₂-haltigen Gas enthaltenem NO mit dem Reduktionsmittel NH₃ vorgesehen, daß das SO₂- und NO-haltige Gas mit NH₃ gemischt, die Mischung dem Katalysator in einer Menge von 0,2 bis 20 Nl/Minute und pro g Katalysator zugeführt und dort bei 185 bis 500°C sowie bei Normaldruck in der Wirbelschicht zur Reaktion gebracht wird, wobei der Katalysator eine Teilchengröße von 0,1 bis 3 mm hat und aus einem sauren Träger sowie einer aktiven Komponente zusammengesetzt ist, wobei die aktive Komponente aus V₂O₅, MnO₂, CuO, Fe₂O₃, NiO und/oder Y₂O₃ besteht sowie in einer Menge von 0,5 bis 20 Gew.% auf den Träger aufgebracht ist, wobei der Wirbelschicht pro Tag 1 bis 33 Gew.% des Katalysators entnommen, regeneriert und in die Wirbelschicht zurückgeführt werden und wobei die in der Wirbelschicht befindliche Katalysatormenge so verändert wird, daß dadurch die Entstickungsleistung den schwankenden NO-Gehalten des Gases angepaßt wird.

In weiterer Ausgestaltung des erfindungsgemäßen Verfahrens ist vorgesehen, daß der aus der Wirbelschicht kontinuierlich entnommene Katalysator zu seiner Regenerierung in einer Wirbelschicht unter Verwendung von Luft als Wirbelgas 0,5 bis 5 Minuten auf 600 bis 900°C erhitzt wird. Alternativ ist in weiterer Ausgestaltung der Erfindung vorgesehen, daß der aus der Wirbelschicht entnommene Katalysator abgekühlt und zu seiner Regenerierung bei 20 bis 70°C während 1 bis 10 Minuten mit einer wäßrigen Lösung imprägniert wird, welche Nitrate und/oder Sulfate der Elemente V, Mn, Cu, Fe, Ni und/oder Y enthält und daß der mit der Lösung imprägnierte Katalysator wahrend 1 bis 2 Stunden bei 150°C getrocknet sowie anschließend während 1 bis 2 Stunden bei 550 bis 900°C geglüht wird. Nach einer weiteren Ausgestaltung des erfindungsgemäßen Verfahrens ist es besonders vorteilhaft, wenn das SO₂- und NO-haltige Gas mit NH₃ im Molverhältnis NO : NH₃ = 1 : 0,7 bis 1 : 1,3 gemischt wird.

Schließlich ist in weiterer Ausgestaltung der Erfindung vorgesehen, daß der durch mechanischen Abrieb entstehende Katalysatorstaub zusammen mit dem im Gas enthaltenen Staub abgeschieden, gesammelt und bei einem pH-Wert von 1 bis 2 mit Schwefelsäure oder Salpetersäure ausgelaugt wird und daß die dabei entstehende saure metallsalzhaltige Lösung zur Herstellung von neuem Katalysator oder zur nassen Regenerierung von verbrauchtem Katalysator verwendet wird.

Das erfindungsgemäße Verfahren kann besonders vorteilhaft zur Entstickung von Abgasen verwendet werden, die bei der Verbrennung kohlenstoffhaltiger Brennstoffe, insbesondere Erdgas, Erdöl und Kohle, anfallen und die SO₂ enthalten. Es hat sich gezeigt, daß die aktiven Komponenten des Entstickungskatalysators mit dem im Abgas enthaltenen SO₂ mehr oder weniger stark reagieren, wobei insbesondere die Sulfate und Sulfite des Mangans, Kupfers und des Eisens entstehen. Zur Regenerierung des Entstickungskatalysators müssen diese Verbindungen wieder in Oxide überführt werden, was nach der Erfindung entweder auf trockenem oder auf nassem Weg möglich ist, wobei die trockene Regenerierung in der Wirbelschicht in vorteilhafter Weise ein SO₂-haltiges Gas liefert, das z.B. in an sich bekannter Weise zu Schwefelsäure verarbeitet werden kann. Die Regenerierung auf nassem Weg hat den Vorteil, daß der Entstickungsreaktion ständig frischer Katalysator zugeführt wird, was sich vorteilhaft auf die Entstickungsleistung auswirkt. Durch die erfindungsgemäße Maßnahme, den in der Wirbelschicht anfallenden schwermetallhaltigen Katalysatorabrieb erneut zur Katalysatorherstellung bzw. zur Katalysatorregenerierung zu verwenden, wird die Entstehung umweltbelastender Verfahrensrückstände vermieden, zumal der in der Wirbelschicht befindliche Katalysator eine außerordentlich hohe Lebensdauer hat und nicht nach einiger Zeit ausgewechselt und auf einer Sondermülldeponie abgelagert werden muß.

Das erfindungsgemäße Verfahren wird nachfolgend anhand des Verfahrensfließbildes näher erläutert.

Durch die Leitung 1 gelangt das weitgehend entstaubte Abgas einer Verbrennungsanlage mit einer Temperatur von 250 bis 280°C in den Wirbelschichtreaktor 3. Dem Abgas wird über die Leitung 2 NH₃ im Molverhältnis NO : NH₃ = 1 : 1 zugemischt. Im Wirbelschichtreaktor 3 befindet sich der Katalysator, der aus einem Träger und einer aktiven Komponente besteht sowie eine Teilchengröße von 0,1 bis 0,5 mm hat. Der Träger des Katalysators besteht aus einem Aluminiumsilikat, und als aktive Komponente werden Mangan- und Kupferoxid im Molverhältnis 1 : 1 verwendet. Im Wirbelschichtreaktor 3 reagiert das im Abgas enthaltene NO mit dem zugesetzten NH₃, wobei vorzugsweise Stickstoff und Wasserdampf entstehen. Das entstickte Abgas wird aus dem Wirbelschichtreaktor 3 über die Leitung 4 in die hintereinander geschalteten Zyklone 6 und 7 geführt, wo der durch mechanischen Abrieb gebildete Katalysatorstaub sowie etwa noch vorhandene Staubteilchen fast vollständig abgeschieden werden. Das aus dem Zyklon 7 austretende Abgas gelangt in das Elektrofilter 8, wo die restlichen Staubteilchen entfernt werden. Anschließend wird das entstaubte Abgas über die Leitung 29 abgeführt.

Aus dem unteren Teil des Wirbelschichtreaktors 3 werden pro Tag kontinuierlich 5 bis 10 % des dort befindlichen Katalysators abgezogen und über die Leitung 5 in den viel kleiner dimensionierten Wirbelschichtreaktor 10 geführt. In den Wirbelschichtreaktor 10 gelangt über die Leitung 11 Luft, die eine Temperatur von 800°C hat und als Wirbelgas dient. Die dem Wirbelschichtreaktor 10 zugeführten Katalysatorteilchen haben dort eine Verweilzeit von ca. 4 Minuten und geben während dieser Zeit das aufgenommene SO₂ ab. Das SO₂-haltige Wirbelgas verläßt den Wirbelschichtreaktor 10 über die Leitung 12 und gelangt anschließend in den Zyklon 13, wo es entstaubt wird. Der im Zyklon 13 anfallende Staub, bei dem es sich fast ausschließlich um Katalysatorabrieb handelt, gelangt über die Leitung 15 in die Leitung 9. Das entstaubte SO₂-haltige Wirbelgas wird über die Leitung 14 abgeführt und in an sich bekannter Weise unter Rückgewinnung von Wärme abgekühlt und anschließend aufgearbeitet. Der regenerierte Katalysator wird aus dem Wirbelschichtreaktor 10 über die Leitung 16 in den Wirbelschichtreaktor 3 zurückgeführt.

Der Katalysatorabrieb gelangt aus der Leitung 9 in den Rührbehälter 17, wo er mit wässriger Salpetersäure bei einem pH-Wert von 1 bis 2 ausgelaugt wird. Die wässrige Salpetersäure gelangt über die Leitung 18 in den Rührbehälter 17. Der ausgelaugte metallfreie Katalysatorstaub wird dem Rührbehälter 17 über die Leitung 23 entnommen, getrocknet und als Rohmaterial für die Herstellung neuer Katalysator-Pellets verwendet. Die metallsalzhaltige wässrige Lösung wird aus dem Rührbehälter 17 über die Leitung 19 in den Rührbehälter 20 gefördert, wo durch Imprägnierung von Trägerteilchen neuer Katalysator hergestellt wird. Über die Leitung 21 wird eine wässrige Lösung in den Rührbehälter 20 gefördert, die Kupfernitrat und Mangannitrat enthält. Die Trägerteilchen des Katalysators gelangen über die Leitung 22 in den Rührbehälter 20. Die nassen Katalysatorteilchen werden über die Leitung 24 in den als Wirbelschichtreaktor ausgebildeten Trockner 25 gefördert, wo sie bei ca. 150°C getrocknet werden. Die getrockneten Katalysatorteilchen gelangen anschließend über die Leitung 26 in den Ofen 27, wo sie bei einer Temperatur von ca. 600° geglüht werden. Hierbei zersetzen sich die Nitrate des Kupfers und Mangans zu den entsprechenden Oxiden. Der so hergestellte neue Katalysator wird über die Leitung 28 in den Vorratsbunker 30 gefördert und kann von dort im Bedarfsfall in den Wirbelschichtreaktor 3 eingebracht werden. Der metallfreie Katalysatorstaub wird der Pelletiervorrichtung 31 zugeführt, wo Trägerpellets hergestellt werden, die dann über die Leitung 22 in den Rührbehälter 20 gelangen.

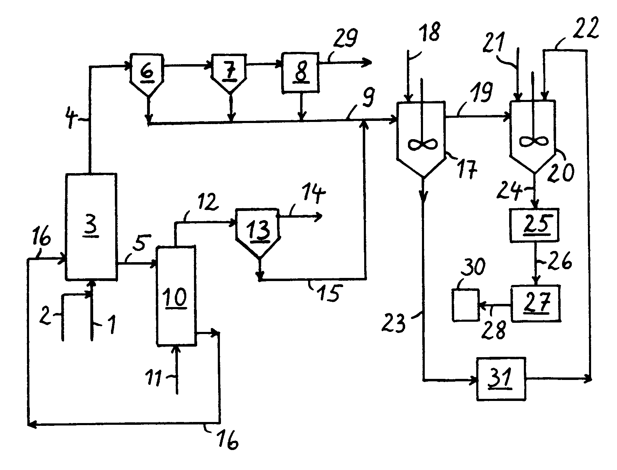

## Patentansprüche

1. Verfahren zur katalytischen Reduktion von in einem SO₂-haltigen Gas enthaltenem NO mit dem Reduktionsmittel NH₃, bei dem das SO₂- und NO-haltige Gas mit NH₃ gemischt, die Mischung dem Katalysator in einer Menge von 0,2 bis 20 Nl/Minute und pro g Katalysator zugeführt und dort bei 185 bis 500°C sowie bei Normaldruck in der Wirbelschicht zur Reaktion gebracht wird, wobei der Katalysator eine Teilchengröße von 0,1 bis 3 mm hat und aus einem sauren Träger sowie einer aktiven Komponente zusammengesetzt ist, wobei die aktive Komponente aus V₂O₅, MnO₂, CuO, Fe₂O₃, NiO und/oder Y₂O₃ besteht sowie in einer Menge von 0,5 bis 20 Gew.% auf den Träger aufgebracht ist, wobei der Wirbelschicht pro Tag 1 bis 33 Gew.% des Katalysators entnommen, regeneriert und in die Wirbelschicht zurückgeführt werden und wobei die in der Wirbelschicht befindliche Katalysatormenge so verändert wird, daß dadurch die Entstickungsleistung den schwankenden NO-Gehalten des Gases angepaßt wird.

2. Verfahren nach Anspruch 1, dadurch gekennzeichnet, daß der aus der Wirbelschicht kontinuierlich entnommene Katalysator zu seiner Regenerierung in einer Wirbelschicht unter Verwendung von Luft als Wirbelgas 0,5 bis 5 Minuten auf 600 bis 900°C erhitzt wird.

3. Verfahren nach Anspruch 1, dadurch gekennzeichnet, daß der aus der Wirbelschicht entnommene Katalysator abgekühlt und zu seiner Regenerierung bei 20 bis 70°C während 1 bis 10 Minuten mit einer wäßrigen Lösung imprägniert wird, welche Nitrate und/oder Sulfate der Elemente V, Mn, Cu, Fe, Ni und/oder Y enthält und daß der mit der Lösung imprägnierte Katalysator während 1 bis 2 Stunden bei 150°C getrocknet sowie anschließend während 1 bis 2 Stunden bei 550 bis 900°C geglüht wird.

4. Verfahren nach den Ansprüchen 1 bis 3, dadurch gekennzeichnet, daß das SO₂- und NO-haltige Gas mit NH₃ im Molverhältnis NO : NH₃ = 1 : 0,7 bis 1 : 1,3 gemischt wird.

5. Verfahren nach den Ansprüchen 1 bis 4, dadurch gekennzeichnet, daß der durch mechanischen Abrieb entstehende Katalysatorstaub zusammen mit dem im Gas enthaltenen Staub abgeschieden, gesammelt und bei einem pH-Wert von 1 bis 2 mit Schwefelsäure oder Salpetersäure ausgelaugt wird und daß die dabei entstehende saure metallsalzhaltige Lösung zur Herstellung von neuem Katalysator oder zur nassen Regenerierung von verbrauchtem Katalysator verwendet wird.

## Claims

1. A process for catalytic reduction of NO which is contained in an SO₂-containing gas by a treatment with NH₃ as a reducing agent, wherein the gas that contains SO₂ and NO is mixed with NH₃, the mixture is fed to the catalyst at a rate of 0.2 to 20 standard liters per minute and per gram of catalyst and is reacted there in a fluidized bed under normal pressure at a temperature between 185 and 500°C, and the catalyst has a particle size between 0.1 and 3 mm and is composed of an acid support and an active component, which consists of V₂O₅, MnO₂, CuO, Fe₂O₃, NiO and/or Y₂O₃ and has been applied to the support in a quantity of 0.5 to 20 % by weight, wherein 1 to 33 % by weight of the catalyst contained in the fluidized bed is removed from the fluidized bed and is regenerated and returned to the fluidized bed per day and wherein the amount of catalyst in the fluidized bed is changed in that way that the rate at which NO is reduced can be adapted to the fluctuating NO contents of the gas.

2. A process according to claim 1, characterized in that the catalyst is continuously removed from the fluidized bed and is regenerated in a fluidized bed in which air is used as a fluidizing gas by being heated to 600 to 900°C for 0.5 to 5 minutes.

3. A process according to claim 1, characterized in that the catalyst that has been removed from the fluidized bed is cooled and for its regeneration is treated at 20 to 70°C for 1 to 10 minutes with an aqueous solution which contains nitrates and/or sulfates of the elements V, Mn, Cu, Fe, Ni and/or Y, and the catalyst which has been treated with the solution is dried at 150°C for one to two hours and is subsequently heated at 550 to 900°C for 1 to 2 hours.

4. A process according to claims 1 to 3, characterized in that the gas which contains SO₂ and NO is mixed with NH₃ in a molar ratio of NO : NH₃ = 1 : 0.7 to 1 : 1.3.

5. A process according to claims 1 to 4, characterized in that the catalyst dust formed by mechanical abrasion and the dust that is contained in the gas are jointly separated and collected and are leached with sulfuric acid or nitric acid having a pH value between 1 and 2 and the resulting acid solution which contains metal salt is used to produce new catalyst or for a wet regeneration of spent catalyst.

## Revendications

1. Procédé de réduction catalytique du NO contenu dans un gaz à teneur en SO₂ par l'agent réducteur qu'est NH₃, qui consiste à mélanger le gaz contenant du SO₂ et du NO à du NH₃, à envoyer le mélange à un catalyseur en une quantité de 0,2 à 20 litres normaux/minute et par g de catalyseur, et à l'y mettre à réagir en lit fluidisé entre 185 et 500°C, ainsi que sous la pression normale, le catalyseur ayant une granulométrie de 0,1 à 3 mm et étant composé d'un support acide ainsi que d'un constituant acide, le constituant actif étant en V₂O₅, MnO₂, CuO, Fe₂O₃, NiO et/ou Y₂O₃ et étant déposé sur le support en une quantité de 0,5 à 20 % en poids, à prélever du lit fluidisé chaque jour de 1 à 33 % du poids du catalyseur, à les régénérer et à le retourner au lit fluidisé, la quantité de catalyseur se trouvant dans le lit fluidisé étant modifiée de manière à adapter la capacité de dénitrification à la teneur fluctuante en NO du gaz.

2. Procédé suivant la revendication 1, caractérisé en ce qu'il consiste à porter entre 600 et 900°C pendant 0,5 à 5 minutes le catalyseur prélevé en continu du lit fluidisé pour sa régénération dans un lit fluidisé, en utilisant de l'air comme gaz de fluidisation.

3. Procédé suivant la revendication 1, caractérisé en ce qu'il consiste à refroidir le catalyseur prélevé du lit fluidisé et à l'imprégner, pour sa régénération, entre 20 et 70°C pendant 1 à 10 minutes d'une solution aqueuse qui contient des nitrates et/ou des sulfates des éléments V, Mn, Cu, Fe, Ni et/ou Y, et à sécher le catalyseur imprégné de la solution pendant 1 à 2 heures à 150°C, puis à la cuire ensuite pendant 1 à 2 heures entre 550 et 900°C.

4. Procédé suivant l'une des revendications 1 à 3, caractérisé en ce qu'il consiste à mélanger du gaz contenant du SO₂ et du NO à du NH₃ en un rapport molaire NO : NH₃ = 1 : 0,7 à 1 : 1,3.

5. Procédé suivant l'une des revendications 1 à 4, caractérisé en ce qu'il consiste à séparer la poussière de catalyseur se formant par attrition mécanique en même temps que la poussière contenue dans le gaz, à la rassembler et à la lixivier à un pH de 1 à 2 par de l'acide sulfurique ou par de l'acide nitrique, et à utiliser la solution acide et contenant un sel métallique ainsi formé pour la fabrication de nouveaux catalyseurs ou pour la régénération par voie humide de catalyseurs usés.
